# EUROPÄISCHE PATENTANMELDUNG

(11) **EP 1 033 845 A2**
(43) Veröffentlichungstag der Anmeldung: **06.09.2000**
(21) Anmeldenummer: 00102616.0
(22) Anmeldetag: 08.02.2000
(51) Int. Cl.: H04L 12/28, H04J 3/00

(54) **Verfahren und Einrichtung zur Übertragung von paketorientierten Daten zwischen leitungsvermittelten Kommunikationsnetzen**

(30) Priorität: 08.02.1999 DE 19905149
(71) Anmelder: DeTeMobil Deutsche Telekom MobilNet GmbH, 53227 Bonn (DE)
(72) Erfinder: Keller, Walter, 40880 Ratingen (DE)

(57) **Zusammenfassung**

Bei der Übertragung von Daten zwischen leitungsvermittelten Kommunikationsnetzen wird zweck besserer Auslastung vorgeschlagen, dass Daten aus bestimmten Datenquellen im Ursprungsnetz geeignet komprimiert und über mehrfach genutzte Paketmultiplexverbindungen zu weiteren Kommunikationsnetzen geleitet werden.

## Beschreibung

Die Erfindung betrifft ein Verfahren und eine Einrichtung zur Übertragung von paketorientierten Daten zwischen leitungsvermittelten Kommunikationsnetzen.
Nach dem derzeit bekannten Stand der Technik existieren leitungsvermittelte Übertragungseinrichtungen zwischen verschiedenen Telekommunikationsnetzen, die auch zur Übertragung von verschiedenen paketorienten Daten (beispielsweise Internet-Protokoll oder X.25-Protokoll) verwendet werden.
Aus wirtschaftlichen Erwägungen sowie zur Optimierung der Auslastung vorhandener Übertragungskapazitäten erscheint es sinnvoll, die leitungsvermittelte Übertragung zwischen unterschiedlichen Telekommunikationsnetzen bei der Übertragung von paketorientierten Daten (beispielsweise Internet-Protokoll oder X.25-Protokoll) zu optimieren.

In der Praxis wird ein vorhandenes Telekommunikationsnetz häufig im Teilnehmeranschlußbereich (letzte Meile, Local Loop) als Zubringer für neue private Telekommunikationsnetze (PTN) genutzt. In diesen Fällen findet im TN (z.B. in der Ortsvermittlungsstelle/ untere Netzebene) eine Auskopplung der entsprechenden Kommunikationsleitungen Stall. Dabei werden die leitungsvermittelten 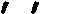 Gespräche" in der Regel über eine Leitungsmultiplexeinrichtung mittels einer höherwertigen Verbindungsleitung, deren Kanalzahl der mittleren statistischen Belegung entspricht 〈Bündel), zum privaten Netzbetreiber geführt. Die auszukoppelnden Leitungen werden dabei an einer entsprechenden Kennziffer erkannt.
Bei diesem Verfahren kann nicht zwischen unterschiedlichen Anwendungen der Kunden entschieden werden. Somit besteht u.U. bei Datenübertragungsanwendungen (z.B. Internet-Session) eine ungünstige Verkehrsauslastung dadurch, das zwischen den einzelnen paketorientierten Übertragungen bisweilen große Lücken vorhanden sind, die leitungsvermittelten Verbindungen jedoch die gesamte Zeit gehalten werden müssen.

Der Erfindung liegt deshalb die Aufgabe zugrunde, diesen Nachteil des Standes zu vermeiden und ein Verfahren und eine Einrichtung zur Durchführung des Verfahrens anzugeben, welches eine hohe Auslastung der vorhandenen Leitungen ermöglichst und die Qualität der Übertragung nicht wesentlich einschränkt.

Das erfindungsgemäß vorgestellte Verfahren vermeidet diese Nachteile, indem paketorientierte Daten am Ort der Auskopplung des Verkehrs im Telekommunikationsnetz einer Paketmultiplexeinrichtung zugeführt werden und demgemäß eine größere Anzahl von Datenverbindungen auf gemeinsam genutzten Übertragungskanälen zum privaten Kommunikationsnetz geführt werden kann. Die Kennzeichnung der betreffenden datenhaltigen Verbindungen erfolgt dabei vorzugsweise über eine getrennte neue Zugangsnummer für Datenverbindungen (z.B. getrennter 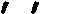 Internetzugang"), oder alternativ über eine erweiterte vorhanden Zugangsnummer des privaten Netzbetreibers. Für den Fall, daß es sich bei der Datenanwendung um eine Internet-Anwendung handelt, verfügt der private Netzbetreiber aus Sicht des am Telekommunikationsnetz angeschalteten Kunden, über einen im Ortsnetz vorhandenen Internetzugang (POP: Point of Presentation), ohne daß physikalisch der damit in der Regel erforderliche hohe Aufwand betrieben werden muß. Das Verfahren kann mit bundesweit identischer Zugangskennziffer in jedem Ortsnetz des Telekommunikationsnetzes durchgeführt werden. Durch die bereits vorkonzentrierten Paketdaten aus den unterschiedlichen Ortsnetzen ist im privaten Kommunikationsnetz eine recht einfache, auf Routertechnik basierende Zusammenführung und Verarbeitung der Daten möglich. Beispielsweise kann ein zentraler Übergang zum Internet eingerichtet werden.

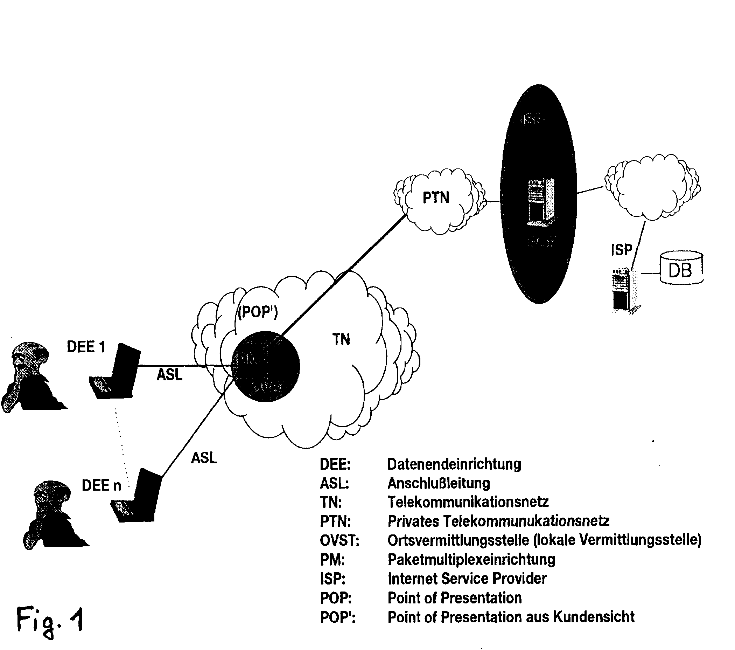

## Patentansprüche

1. Verfahren zur Übertragung von paketorientierten Daten zwischen einem ersten und mindesten einem weiteren leitungsvermittelten Kommunkationsnetz, gekennzeichnet dadurch, daß die paketorientierten Daten bereits im Netz des für den Teilnehmerzugang verwendeten ersten Telekommunikationsnetzes mittels einer hierzu installierten Datenmultiplexeinrichtung ausgekoppelt und über mehrfach genutzte Paketmultiplexverbindungen zu dem weiteren Kommunikationsnetz geleitet werden.

2. Verfahren nach Anspruch 1, wobei die Identifikation der paketorientierten Datenverbindung in der auskoppelnden Vermittlungsstelle des für den Teilnehmerzugang verwendeten ersten Telekommunikationsnetzes an Hand der gewählten Rufnummer durchgeführt wird und wobei in einer bevorzugten Ausführung eine besondere neue Datenrufnummer des privaten Netzbetreibers herangezogen (z.B. Internet-Zugangsnummer) wird.

3. Verfahren nach Anspruch 1 oder 2, wobei in einer alternativen bevorzugten Verfahrensweise eine besondere Datenzugangsrufnummer, bestehend aus den vorhandenen Zugangskennziffern des weiteren (privaten) Telekommunikationsnetzes, gefolgt von einer spezifischen dafür vorgesehenen Rufnummer für den Datenzugang verwendet wird.

4. Verfahren nach einem oder mehreren der Ansprüche 1 bis 3, wobei die Datenzugangsrufnummer des weiteren (privaten) Telekommunikationsnetzes in allen Ortsnetzen des ersten Telekommunikationsnetzes identisch sein kann.

5. Einrichtung zur Durchführung des Verfahrens nach Anspruch 1, dadurch gekennzeichnet, daß im ersten Telekommunikationsnetz eine Datenmultiplexeinrichtung zur Auskopplung der paketorientierten Daten des ersten Telekommunikationsnetzes installiert und mehrfach genutzte Paketmultiplexverbindungseinrichtungen mit dem weiteren Kommunikationsnetz verbunden ist und daß darüber die paketorientierten Daten an das weiteren Kommunikationsnetz geleitet werden.
